# EUROPEAN PATENT APPLICATION

(11) **EP 4 633 009 A1**
(43) Date of publication of application: **15.10.2025**
(21) Application number: 25163230.3
(22) Date of filing: 12.03.2025
(51) Int. Cl.: H02K 1/2733, H02K 5/24, H02K 7/08, H02K 21/16, H02K 29/08

(54) **MOTOR DEVICE**

(30) Priority: 09.04.2024 JP 2024062778
(71) Applicant: Mitsuba Corporation, Kiryu-shi, Gunma 376-8555 (JP)
(72) Inventor: TOZUKA, Yosuke, Kiryu-shi, Gunma, 376-8555 (JP)
(74) Representative: Winter, Brandl - Partnerschaft mbB

(57) **Abstract**

An axial central part of a ring magnet (43) deviates to a side opposite to an abutment direction of an abutment member (44) against a first ball bearing (23), with respect to an axial central part of a stator core (31). Thus, by supplying drive current to a coil (34) and driving an electric motor part (20), magnetic attraction force (MF) can be generated that attempts to move a rotor (40) toward the other axial side. Due to the action of the magnetic attraction force (MF), the occurrence of rattling and deviation of the axial position of the rotor (40) can be eliminated. Consequently, a constant separation distance between the ring magnet (43) and Hall elements (Hu, Hv, and Hw) in the axial direction of the rotating shaft (41) can be maintained, and stable sensing can be performed while an increase in inertial mass is suppressed.

## Description

### [Technical Field]

The present disclosure relates to a motor device including a stator and a rotor.

### [Related Art]

For example, Patent Document 1 describes a motor which includes a motor shaft, a sensor magnet movable in an axial direction with respect to the motor shaft, and a sensor board facing the sensor magnet in the axial direction of the motor shaft. The sensor magnet is pressed toward the sensor board by spring force of a spring in the axial direction of the motor shaft. Accordingly, automatic adjustment of a gap between the sensor magnet and a magnetic detection element of the sensor board is enabled, and stable sensing is sought.

### [Prior-Art Documents]

### [Patent Documents]

[Patent Document 1] Japanese Patent Laid-open No. 2016-127709

### [SUMMARY OF THE INVENTION]

### [Problems to Be Solved by the Invention]

However, in the technology described in Patent Document 1, the sensor magnet which has a larger diameter than the motor shaft is pressed toward the sensor board by the spring force of the spring. Hence, a spring that generates relatively large spring force is necessary. Accordingly, a rotor is increased in weight and inertial mass is increased, which may lead to a decrease in responsiveness.

An object of the present disclosure is to provide a motor device in which a rotor can be pressed in an axial direction by magnetic attraction force, and stable sensing can be performed while an increase in inertial mass can be suppressed.

### [Means for Solving the Problems]

In one aspect of a motor device, the motor device includes a stator and a rotor. The stator includes: a stator core, fixed radially inside a motor case; and a coil, wound on teeth provided on the stator core. The rotor includes: a rotating shaft, rotatably supported by a bearing fixed to the motor case; a magnet, integrally provided on the rotating shaft; and an abutment member, fixed to the rotating shaft and abutted against the bearing from one axial side of the rotating shaft toward an other axial side of the rotating shaft. An axial central part of the magnet deviates to a side opposite to an abutment direction of the abutment member against the bearing with respect to an axial central part of the stator core.

### [Effects of the Invention]

According to the present disclosure, a motor device can be realized in which a rotor can be pressed in an axial direction by magnetic attraction force, and stable sensing can be performed while an increase in inertial mass can be suppressed.

### [BRIEF DESCRIPTION OF THE DRAWINGS]

FIG. 1 is a perspective view showing a seat motor mounted in a vehicle.
FIG. 2 is a cross-sectional view taken along an axial direction of a rotating shaft of the seat motor of FIG. 1.
FIG. 3 is a cross-sectional view taken along line A-A of FIG. 2.
FIG. 4 is an enlarged cross-sectional view showing the vicinity of a first ball bearing.
FIG. 5 is an enlarged cross-sectional view showing the vicinity of a second ball bearing.
FIG. 6 is a perspective view of the interior of an electric motor part as seen from a cover member side.
FIG. 7 is a perspective view showing the inside of the cover member.
FIG. 8 is an exploded perspective view showing a rotor as well as a first planetary gear reducer and a second planetary gear reducer.
FIG. 9 is a cross-sectional view of an electric motor part describing the action of magnetic attraction force.

### [DESCRIPTION OF THE EMBODIMENTS]

Hereinafter, one embodiment of the present disclosure will be described in detail with reference to the drawings.

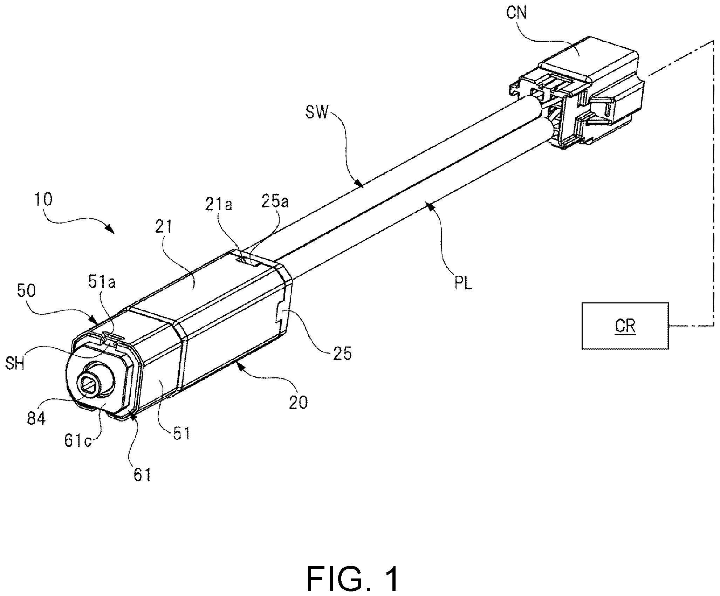

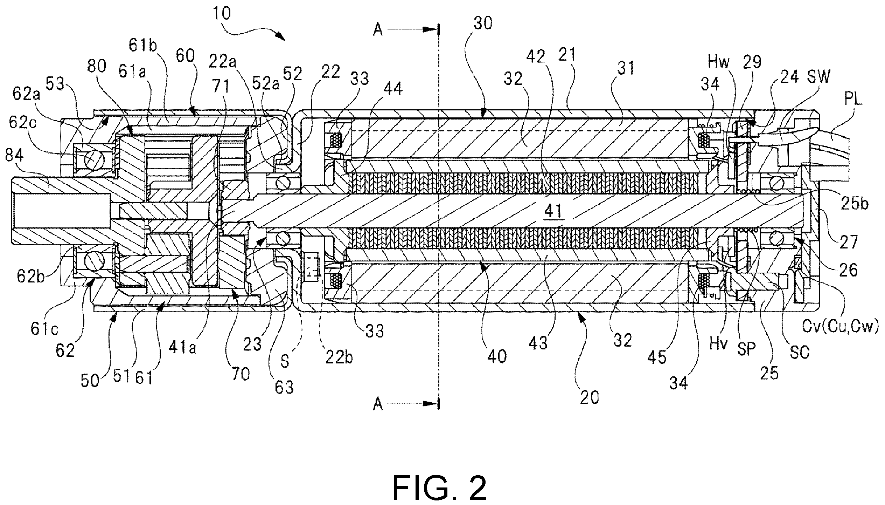

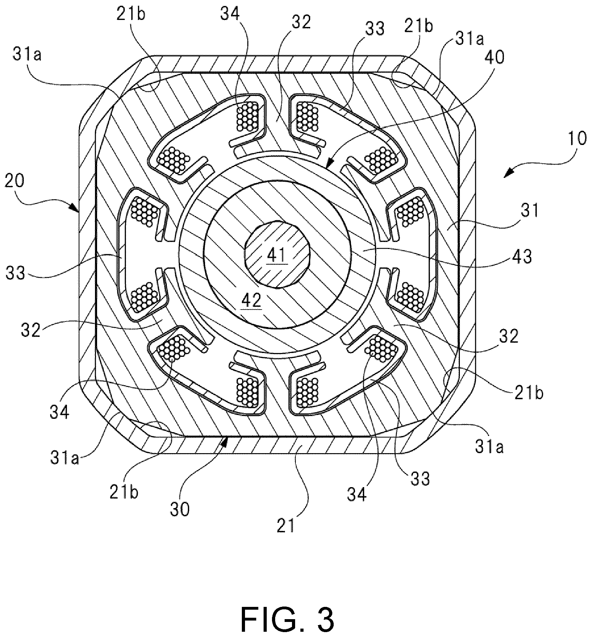

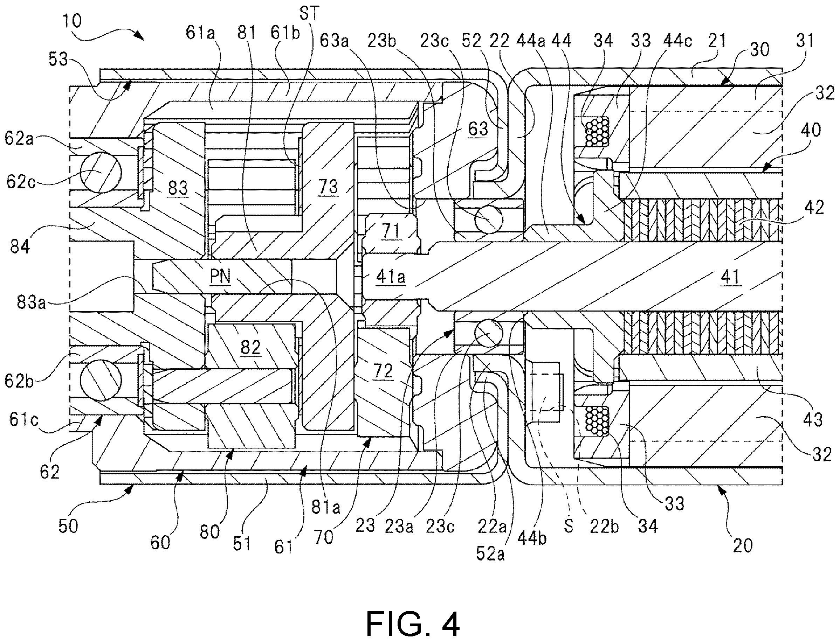

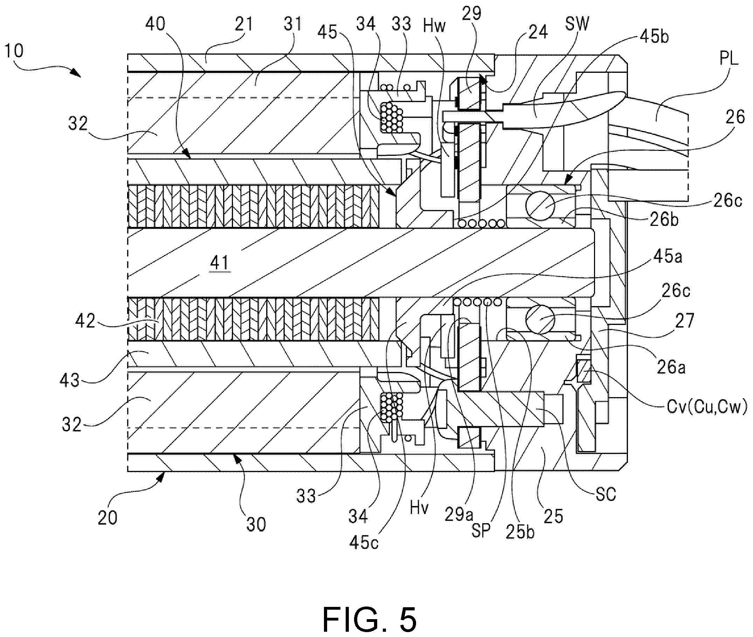

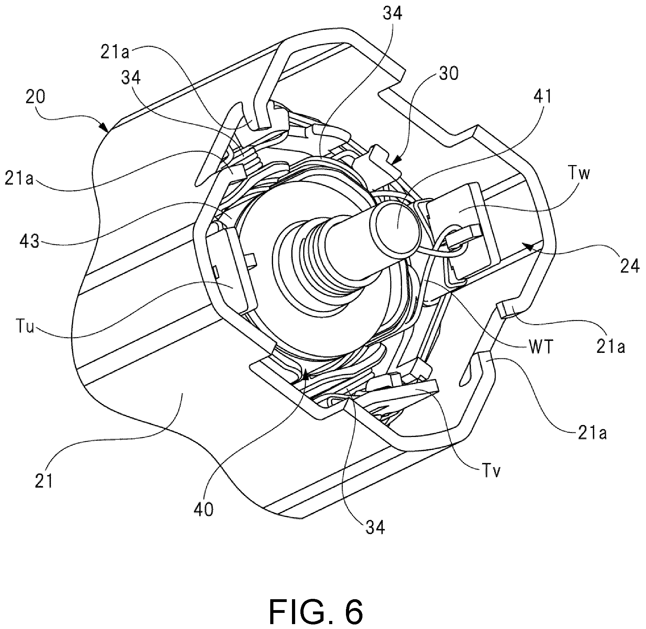

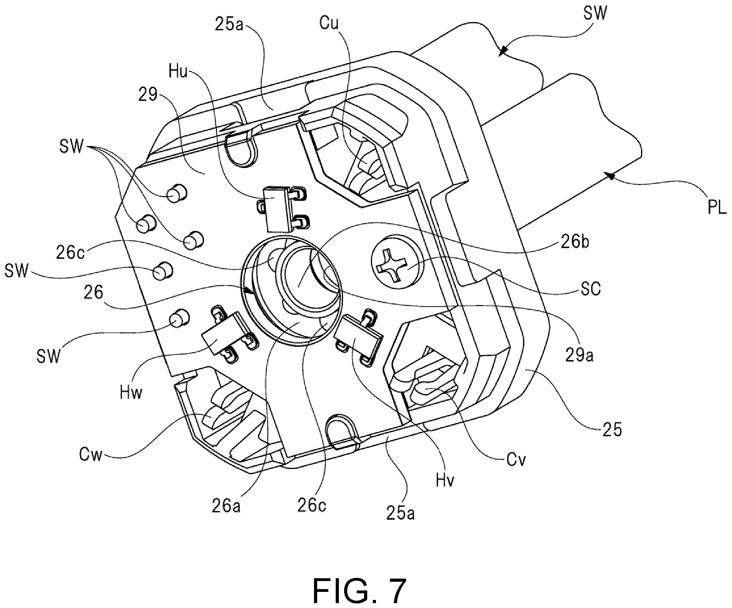

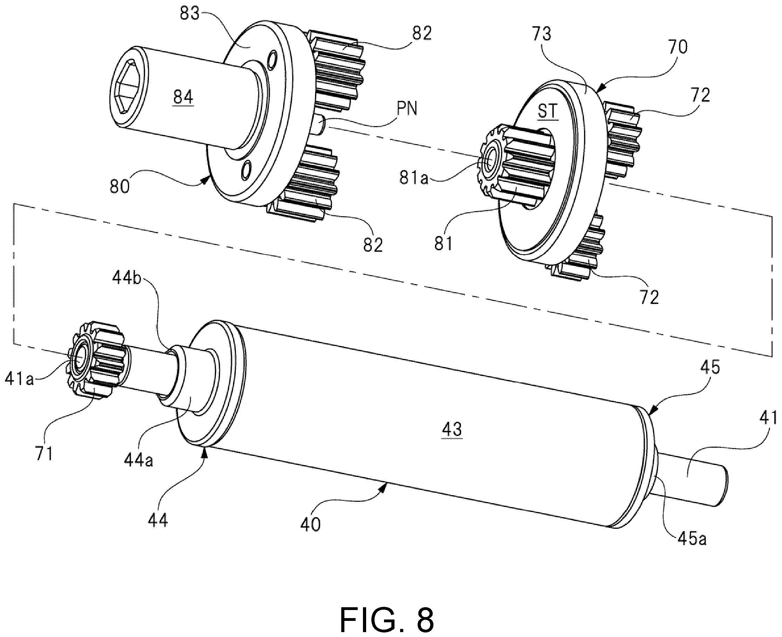

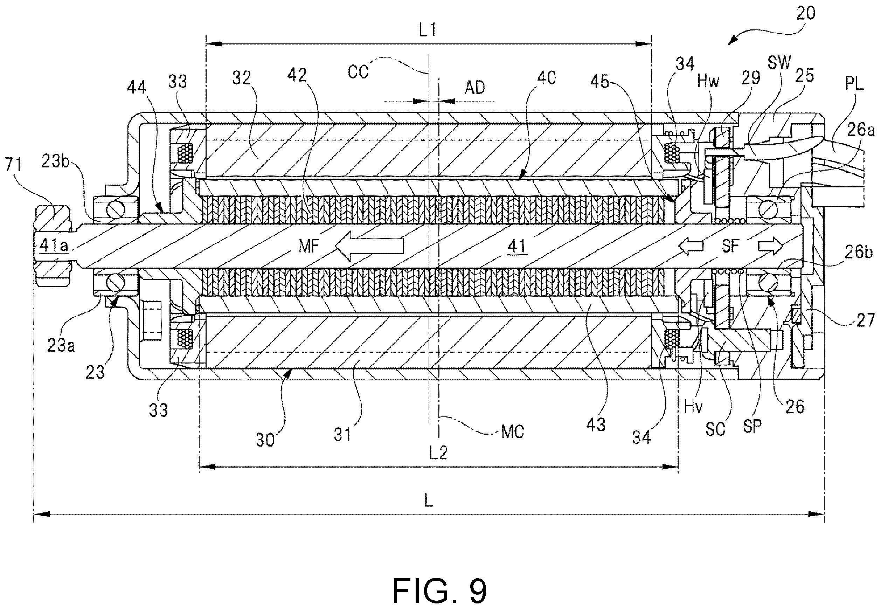

FIG. 1 illustrates a perspective view showing a seat motor mounted in a vehicle. FIG. 2 illustrates a cross-sectional view taken along an axial direction of a rotating shaft of the seat motor of FIG. 1. FIG. 3 illustrates a cross-sectional view taken along line A-A of FIG. 2. FIG. 4 illustrates an enlarged cross-sectional view showing the vicinity of a first ball bearing. FIG. 5 illustrates an enlarged cross-sectional view showing the vicinity of a second ball bearing. FIG. 6 illustrates a perspective view of the interior of an electric motor part as seen from a cover member side. FIG. 7 illustrates a perspective view showing the inside of the cover member. FIG. 8 illustrates an exploded perspective view showing a rotor as well as a first planetary gear reducer and a second planetary gear reducer. FIG. 9 illustrates a cross-sectional view of an electric motor part describing the action of magnetic attraction force.

### <Overview of Electric Seat>

A seat motor 10 shown in FIG. 1 is a drive source built in an electric seat mounted in a vehicle such as an automobile. Specifically, the seat motor 10 drives a reclining mechanism of a backrest, a slide mechanism that moves the electric seat back and forth, and a lifting mechanism that raises and lowers a seat part, or the like. Accordingly, by operating an operation switch arranged beside the electric seat or the like, a driver is able to adjust a posture or position of the electric seat to the driver's preferred driving position.

The seat motor 10 includes a connector CN. The connector CN is electrically connected to an in-vehicle controller CR. Between the connector CN and an electric motor part 20 that forms the seat motor 10, a power line PL that supplies drive current to the electric motor part 20 and a sensor wire SW that sends a sensor signal indicating a rotation state of the electric motor part 20 to the in-vehicle controller CR are arranged.

Accordingly, the in-vehicle controller CR is capable of, for example, accommodating drivers of different body types and storing multiple driving positions (postures of the electric seat). The driver may call up a stored driving position according to their preference.

### <Seat Motor>

As shown in FIG. 1 to FIG. 7, the seat motor 10 includes the electric motor part 20 and a deceleration mechanism 50. The electric motor part 20 and the deceleration mechanism 50 are coaxially arranged. The seat motor 10 as a whole is of a short and angular, substantially rod-like shape.

The seat motor 10 corresponds to a motor device according to the present disclosure.

### <Electric Motor Part>

The electric motor part 20 includes a casing 21. The casing 21 is formed into a bottomed tubular shape by subjecting a steel sheet to deep drawing or the like. The casing 21 has a substantially square cross-sectional shape along a direction orthogonal to its longitudinal direction.

As shown in FIG. 2 and FIG. 4, a bottom wall 22 is provided on the deceleration mechanism 50 side (left side in the figures) in the longitudinal direction of the casing 21. A bearing support cylinder 22a is integrally provided in a central part of the bottom wall 22. An outer ring 23a of a first ball bearing 23 is fixed to the bearing support cylinder 22a by press-fitting.

The bearing support cylinder 22a corresponds to a bearing fixing part according to the present disclosure.

A portion substantially corresponding to 2/3 of the first ball bearing 23 on the electric motor part 20 side (right side in the figures) in the axial direction is press-fitted into the bearing support cylinder 22a. Furthermore, a portion substantially corresponding to 1/3 of the first ball bearing 23 on the deceleration mechanism 50 side in the axial direction is exposed (protruding) from the bearing support cylinder 22a toward the deceleration mechanism 50 side.

Here, the first ball bearing 23 rotatably supports the deceleration mechanism 50 side of the rotating shaft 41 in the axial direction. An inner ring 23b of the first ball bearing 23 is mounted on the deceleration mechanism 50 side of the rotating shaft 41. Specifically, the inner ring 23b of the first ball bearing 23 is mounted on the rotating shaft 41 in a manner allowing movement only in the axial direction of the rotating shaft 41.

As shown in FIG. 4, in a radial direction of the first ball bearing 23, multiple steel balls (rolling bodies) 23c are arranged between the outer ring 23a that is arranged radially outside and the inner ring 23b that is arranged radially inside. Accordingly, the outer ring 23a and the inner ring 23b are capable of smooth relative rotation via the steel ball 23c.

Here, in the axial direction of the rotating shaft 41, a side (right side in FIG. 2) where the connector CN of the seat motor 10 is arranged is defined as "one axial side", and a side (left side in FIG. 2) where the deceleration mechanism 50 of the seat motor 10 is arranged is defined as "other axial side".

A pair of (only one is shown in FIG. 2 and FIG. 4) screw holes 22b are provided in the bottom wall 22. Specifically, the pair of screw holes 22b are arranged facing each other with the bearing support cylinder 22a at the center. A fixing screw S for fixing the deceleration mechanism 50 to the electric motor part 20 is screwed into each of the screw holes 22b.

As shown in FIG. 2 and FIG. 5, an opening part 24 is provided on one axial side of the casing 21, that is, a side opposite to the bottom wall 22 side. A stator 30 and a rotor 40 are incorporated into the inside of the casing 21 via the opening part 24.

A cover member 25 including a resin material such as plastic is mounted on the opening part 24. The cover member 25 blocks the opening part 24, thereby preventing dust or the like from entering the inside of the casing 21. Here, as shown in FIG. 7, a pair of engagement recesses 25a are provided on an outer periphery of the cover member 25. As shown in FIG. 6, a total of four engagement claws 21a of the casing 21 are engaged, two by two, with the engagement recesses 25a. Thus, the cover member 25 reaches a state in which it is prevented from falling off and rattling with respect to the casing 21.

The casing 21 and the cover member 25 correspond to a motor case according to the present disclosure.

As shown in FIG. 5, a bearing support hole 25b is provided in a central part of the cover member 25. An outer ring 26a of the second ball bearing 26 is fixed to the bearing support hole 25b by press-fitting.

The bearing support hole 25b corresponds to a bearing fixing part according to the present disclosure.

The second ball bearing 26 rotatably supports one axial side of the rotating shaft 41. An inner ring 26b of the second ball bearing 26 is mounted on the one axial side of the rotating shaft 41. Specifically, the inner ring 26b of the second ball bearing 26 is mounted on the rotating shaft 41 in a manner that allows movement only in the axial direction of the rotating shaft 41.

Here, in the radial direction of the second ball bearing 26, multiple steel balls (rolling bodies) 26c are arranged between the outer ring 26a that is arranged radially outside and the inner ring 26b that is arranged radially inside. Accordingly, the outer ring 26a and the inner ring 26b are capable of smooth relative rotation via the steel ball 26c. Both the first ball bearing 23 and the second ball bearing 26 are general-purpose products and adopt the same product. Thus, parts can be easily managed and assembly efficiency can be improved.

A conductive member holding plate 27 is mounted on one axial side of the cover member 25. On the cover member 25 side of the conductive member holding plate 27, three conductive members Cu, Cv, and Cw (refer to FIG. 7) corresponding to U-phase, V-phase, and W-phase (three phases) are mounted. Furthermore, on the connector CN side (right side in the figure) of the conductive member holding plate 27, the power line PL and the sensor wire SW are drawn out.

One ends of the three conductive members Cu, Cv, and Cw are electrically connected to three power lines PL corresponding to U-phase, V-phase, and W-phase, respectively. In contrast, the other ends of the three conductive members Cu, Cv, and Cw are electrically connected to coils 34 corresponding to U-phase, V-phase, and W-phase, respectively, via connection terminals Tu, Tv, and Tw shown in FIG. 6.

As shown in FIG. 2, FIG. 5, and FIG. 7, a sensor board 29 is fixed to the other axial side of the cover member 25 by a screw SC. A through hole 29a through which the one axial side of the rotating shaft 41 penetrates is provided in a central part of the sensor board 29. In the vicinity of the through hole 29a, a total of three Hall elements Hu, Hv, and Hw corresponding to U-phase, V-phase, and W-phase are arranged so as to surround the through hole 29a. In this manner, the total of three Hall elements Hu, Hv, and Hw are provided on the cover member 25 via the sensor board 29, and are arranged at equal intervals (120-degree intervals) around the through hole 29a.

Here, the total of three Hall elements Hu, Hv, and Hw are rotation sensors that detect a rotation state of the rotor 40 (rotating shaft 41), and correspond to a magnetic sensor according to the present disclosure.

The Hall elements Hu, Hv, and Hw face an end on one axial side of a ring magnet 43 in the axial direction of the rotating shaft 41. Accordingly, the Hall elements Hu, Hv, and Hw respectively generate a rectangular wave signal at respective timings according to a change in magnetic pole in association with rotation of the ring magnet 43 (rotating shaft 41).

The rectangular wave signals generated by the total of three Hall elements Hu, Hv, and Hw are sent to the in-vehicle controller CR (refer to FIG. 1) via a total of five sensor wires SW (refer to FIG. 7) electrically connected to the sensor board 29. Accordingly, while understanding the rotation state of the rotor 40, the in-vehicle controller CR is able to control a rotation direction or rotation speed of the rotor 40, and also a stop position of the rotor 40.

As shown in FIG. 2 to FIG. 5, the stator 30 is fixed radially inside the casing 21. Specifically, the stator 30 includes a stator core 31 formed of a ferromagnetic body into a substantially tubular shape. The stator core 31 is fixed radially inside the casing 21.

Multiple teeth 32 protruding toward the rotor 40 are integrally provided radially inside the stator core 31. Here, the number of teeth 32 is equal to the number of slots in the stator core 31, which is six in the present embodiment. Of course, the number of teeth 32 can be arbitrarily set according to the specifications of the electric motor part 20.

An insulator 33 made of a resin material such as plastic is mounted on each of the six teeth 32. The coil 34 is wound on each of the teeth 32 via the insulator 33. Here, the coils 34 of the same phase are wound on a pair of teeth 32 arranged facing each other with the rotor 40 at the center. That is, in a circumferential direction of the stator 30, the coils 34 are arranged at equal intervals (60-degree intervals) in the order of U-phase, V-phase, W-phase, U-phase, V-phase, and W-phase.

As shown in FIG. 3, a total of four press-fit corner parts 31a are provided on an outer periphery of the stator core 31. Specifically, the press-fit corner parts 31a are arranged at equal intervals (90-degree intervals) in the circumferential direction of the stator core 31. The press-fit corner parts 31a are fixed, by press-fitting, to an arc-shaped corner part 21b that forms a portion of an inner wall of the casing 21.

Accordingly, the contact area of the stator core 31 with respect to the casing 21 is reduced. While press-fit load of the stator core 31 against the casing 21 is prevented from becoming excessively large, sufficient fixing strength between the stator core 31 and the casing 21 is ensured. The stator 30 which includes the stator core 31, the teeth 32, the insulator 33, and the coil 34 is incorporated from the opening part 24 of the casing 21. During this incorporation process, an automatic assembly device (not shown) may be used. Accordingly, the stator core 31 is accurately positioned at a specified position in the axial direction of the casing 21.

Here, the coils 34 provided two by two and respectfully corresponding to U-phase, V-phase, and W-phase are electrically connected to the connection terminals Tu, Tv, and Tw corresponding to U-phase, V-phase, and W-phase, respectively, via a crossover WT (refer to FIG. 6).

### <Rotor>

As shown in FIG. 2 to FIG. 5, the rotor 40 is rotatably provided radially inside the stator 30 via a minute gap (air gap). The rotor 40 includes the rotating shaft 41 composed of a stepped round steel bar. Specifically, a small diameter part 41a is integrally provided on the other axial side (left side in FIG. 2) of the rotating shaft 41. A first sun gear 71 that forms a first planetary gear reducer 70 of the deceleration mechanism 50 is fixed to the small diameter part 41a.

The one axial side (right side in FIG. 2) of the rotating shaft 41 is rotatably supported by the second ball bearing 26. The other axial side of the rotating shaft 41 is rotatably supported by the first ball bearing 23. That is, the rotating shaft 41 is rotatably supported by the first ball bearing 23 and the second ball bearing 26 fixed to the casing 21 and the cover member 25.

The first ball bearing 23 corresponds to a bearing and a rolling bearing according to the present disclosure. The second ball bearing 26 corresponds to another bearing and a rolling bearing according to the present disclosure.

A rotor core 42 obtained by laminating multiple steel sheets including a ferromagnetic body is mounted on an outer periphery of the rotating shaft 41. Specifically, by press-fitting the rotating shaft 41 into a fixing hole of the rotor core 42, the rotor core 42 is firmly fixed at a specified position in the axial direction of the rotating shaft 41.

Furthermore, the ring magnet 43 is fixed to an outer periphery of the rotor core 42 via an adhesive (not shown). The ring magnet 43 is, for example, a neodymium magnet, and is formed in a substantially tubular shape. The ring magnet 43 is magnetized such that S pole, N pole, S pole, N pole (4 poles in total) are alternately arranged in its circumferential direction. That is, the electric motor part 20 is a 4-pole 6-slot type brushless motor. Of course, the number of poles of the ring magnet 43 can be arbitrarily set according to the specifications of the electric motor part 20.

The ring magnet 43 is integrally provided on the rotating shaft 41 via the rotor core 42, and corresponds to a magnet according to the present disclosure.

As shown in FIG. 4, an end on the other axial side of the ring magnet 43 is abutted against an abutment member 44. On the other hand, as shown in FIG. 5, an end on one axial side of the ring magnet 43 is abutted against a facing member 45. Accordingly, the ring magnet 43 is accurately positioned at a specified position in the axial direction of the rotating shaft 41 by the abutment member 44 and the facing member 45 fixed to the rotating shaft 41.

As shown in FIG. 2 and FIG. 4, an abutment member 44 is arranged on the other axial side of the rotating shaft 41, that is, the small diameter part 41a side. The abutment member 44 is made of polyphenylene sulfide (PPS) resin containing glass fiber, and faces the first ball bearing 23, the rotor core 42, and the ring magnet 43 in the axial direction of the rotating shaft 41.

The abutment member 44 includes a cylindrical fixing part 44a that is fixed to the rotating shaft 41 by press-fitting. On the other axial side of the cylindrical fixing part 44a, an abutment part 44b of an annular shape is provided to abut against the inner ring 23b of the first ball bearing 23 in the axial direction of the rotating shaft 41. In this manner, the abutment member 44 is fixed to the rotating shaft 41, and is abutted against the first ball bearing 23 from the one axial side of the rotating shaft 41 toward the other axial side of the rotating shaft 41. Thus, the rotating shaft 41 to which the abutment member 44 is fixed has its axial position defined by the first ball bearing 23.

The abutment member 44 includes an annular flat plate part 44c. The annular flat plate part 44c is formed to have a larger diameter than the cylindrical fixing part 44a and in a substantially platelike shape. The annular flat plate part 44c is integrally provided on one axial side of the cylindrical fixing part 44a in the axial direction of the rotating shaft 41.

An end on the other axial side of the rotor core 42 and an end on the other axial side of the ring magnet 43 are respectively abutted against one axial side of the annular flat plate part 44c, Accordingly, the rotor core 42 and the ring magnet 43 have their axial position defined by the first ball bearing 23 via the abutment member 44.

As shown in FIG. 2 and FIG. 5, the facing member 45 is fixed on the one axial side of the rotating shaft 41, that is, a side opposite to the small diameter part 41a side. The facing member 45 is also made of PPS resin containing glass fiber, like the abutment member 44. The facing member 45 is provided between the second ball bearing 26 and the ring magnet 43 in the axial direction of the rotating shaft 41, and faces the second ball bearing 26, the rotor core 42, and the ring magnet 43 in the axial direction of the rotating shaft 41.

The facing member 45 includes a cylindrical fixing part 45a that is fixed to the rotating shaft 41 by press-fitting. On one axial side of the cylindrical fixing part 45a, a spring support 45b of an annular shape is provided that supports the other axial side of an anti-rattle spring SP composed of a coil spring. Here, one axial side of the anti-rattle spring SP is supported by the inner ring 26b of the second ball bearing 26.

The anti-rattle spring SP is arranged between the spring support 45b and the inner ring 26b with an initial load applied thereto. That is, the anti-rattle spring SP is arranged between the second ball bearing 26 and the facing member 45 in the axial direction of the rotating shaft 41 with a compressive load applied thereto. Accordingly, the rotor 40 and the anti-rattle spring SP are arranged to stretch between the inner ring 23b of the first ball bearing 23 and the inner ring 26b of the second ball bearing 26.

The anti-rattle spring SP corresponds to a coil spring according to the present disclosure.

Thus, the inner ring 23b of the first ball bearing 23 and the inner ring 26b of the second ball bearing 26 are suppressed from rattling in the axial direction with respect to their respective outer rings 23a and 26a. In this manner, spring force of the anti-rattle spring SP suppresses the first ball bearing 23 and the second ball bearing 26 from rattling in the axial direction. Consequently, the occurrence of noise (mechanical noise) during rotation of the rotor 40 may be effectively suppressed.

The facing member 45 includes an annular flat plate part 45c. The annular flat plate part 45c is formed to have a larger diameter than the cylindrical fixing part 45a and in a substantially platelike shape. The annular flat plate part 45c is integrally provided on the other axial side of the cylindrical fixing part 45a in the axial direction of the rotating shaft 41.

An end on the one axial side of the ring magnet 43 abuts against the other axial side of the annular flat plate part 45c. Accordingly, the ring magnet 43 does not rattle in the axial direction of the rotating shaft 41 between the abutment member 44 and the facing member 45, and is accurately positioned at a specified position with respect to the axial direction of the rotating shaft 41.

### <Deceleration Mechanism>

As shown in FIG. 2 and FIG. 4, the deceleration mechanism 50 includes a reducer case 51. The reducer case 51 is formed into a bottomed tubular shape by subjecting a steel sheet to deep drawing or the like. The reducer case 51 has a substantially square cross-sectional shape along a direction orthogonal to its longitudinal direction.

On one axial side of the reducer case 51, an annular bottom wall 52 is provided that abuts against the bottom wall 22 of the casing 21 in the axial direction of the rotating shaft 41. In a central part of the annular bottom wall 52, a fitting cylinder 52a to which the bearing support cylinder 22a of the casing 21 is fitted is integrally provided. Accordingly, the reducer case 51 is coaxially arranged with respect to the casing 21.

Provided in the annular bottom wall 52 are a pair of screw insertion holes (not shown) through which the fixing screw S for fixing the deceleration mechanism 50 to the electric motor part 20 is inserted. Specifically, the pair of screw insertion holes respectively face the pair of screw holes 22b provided in the bottom wall 22 of the casing 21 in the axial direction of the rotating shaft 41.

An opening 53 is provided on the other axial side of the reducer case 51, that is, a side opposite to the annular bottom wall 52 side. A planetary gear reducer 60 is incorporated inside the reducer case 51 via the opening 53. An engagement shoulder SH (refer to FIG. 1) is provided on the other axial side of the planetary gear reducer 60. An engagement claw 51a (refer to FIG. 1) of the reducer case 51 engages with the engagement shoulder SH. Accordingly, the planetary gear reducer 60 reaches a state in which it is prevented from falling off and rattling with respect to the reducer case 51.

The planetary gear reducer 60 includes a gearbox 61 that is formed in a substantially box shape and has an internal gear 61a formed radially inside thereof. The gearbox 61 is made of a resin material such as plastic and includes a large diameter part 61b and a small diameter part 61c. Specifically, the large diameter part 61b is arranged on one axial side of the gearbox 61, and the small diameter part 61c is arranged on the other axial side of the gearbox 61. The internal gear 61a is provided all over the large diameter part 61b in the axial direction.

In contrast, a third ball bearing 62 including an outer ring 62a, an inner ring 62b, and a steel ball 62c is accommodated inside the small diameter part 61c. Specifically, the outer ring 62a of the third ball bearing 62 is fixed to the inside of the small diameter part 61c by press-fitting. The inner ring 62b of the third ball bearing 62 rotatably supports an output shaft 84 that forms a second planetary gear reducer 80.

On the one axial side of the gearbox 61, a blocking member 63 of an annular shape is provided that blocks a box opening of the gearbox 61. The blocking member 63 is fixed to the box opening by press-fitting. A through hole 63a is provided in a central part of the blocking member 63. The through hole is fitted to a portion substantially 1/3 on one axial side of the first ball bearing 23.

Accordingly, an axial center of the blocking member 63 (planetary gear reducer 60) and an axial center of the first ball bearing 23 coincide with each other without deviation. Thus, driving force of the rotating shaft 41 rotatably supported by the first ball bearing 23 can be efficiently transmitted to the planetary gear reducer 60. Inside the gearbox 61 and the blocking member 63, the first planetary gear reducer 70 arranged on an input side (electric motor part 20 side) and the second planetary gear reducer 80 arranged on an output side (side where the reclining mechanism or the like is provided) are accommodated.

Specifically, the first planetary gear reducer 70 and the second planetary gear reducer 80 are arranged side by side so as to transmit power to each other in the axial direction of the rotating shaft 41, and the planetary gear reducer 60 performs two-step deceleration. Accordingly, the planetary gear reducer 60 is reduced in diameter.

### <First Planetary Gear Reducer>

As shown in FIG. 4 and FIG. 8, the first planetary gear reducer 70 includes the first sun gear 71 that is mounted on the small diameter part 41a of the rotating shaft 41 and functions as an input part of the first planetary gear reducer 70. The first sun gear 71 is rotated by the rotating shaft 41. The first sun gear 71 is fixed to the small diameter part 41a by press-fitting and is accurately coaxially arranged with respect to the small diameter part 41a.

The first sun gear 71 corresponds to a drive gear according to the present disclosure. The planetary gear reducer 60 (first planetary gear reducer 70 and second planetary gear reducer 80) driven by the first sun gear 71 corresponds to a driving target according to the present disclosure.

The first planetary gear reducer 70 includes three (only two are shown in FIG. 8) first planetary gears 72 that are meshed with both the internal gear 61a provided in the gearbox 61 and the first sun gear 71, and roll around the first sun gear 71. The first planetary gears 72 are each rotatably supported by a first carrier 73 that forms the first planetary gear reducer 70. Specifically, the three first planetary gears 72 are arranged at equal intervals (120-degree intervals) in the circumferential direction of the first carrier 73.

One axial side of the first planetary gear 72 is rotatably abutted against the blocking member 63; the other axial side of the first planetary gear 72 is rotatably abutted against the first carrier 73. Thus, the three first planetary gears 72 are smoothly rotatable and do not rattle in the axial direction of the rotating shaft 41.

Here, since the abutment part 44b of the abutment member 44 fixed to the rotating shaft 41 abuts against the inner ring 23b of the first ball bearing 23, the first sun gear 71 is accurately arranged at a specified position in the axial direction of the rotating shaft 41. Accordingly, the first sun gear 71 is properly meshed with the first planetary gear 72 without abutting against the first carrier 73.

The planetary gear reducer 60 is subjected to centering by the first ball bearing 23 via the blocking member 63. Furthermore, the rotating shaft 41 of the rotor 40 is subjected to centering by the first ball bearing 23. Accordingly, the axial center of the planetary gear reducer 60 and an axial center of the rotor 40 including the first sun gear 71 accurately coincide with each other with the first ball bearing 23 as the reference. Thus, like the rotor 40, the planetary gear reducer 60 is capable of rotating stably at high speed without generating significant mechanical noise.

On the other axial side of the first carrier 73, a second sun gear 81 is integrally provided that functions as an output part of the first planetary gear reducer 70 and functions as an input part of the second planetary gear reducer 80. The second sun gear 81 is hollow and is arranged at an axial center of the first carrier 73.

### <Second Planetary Gear Reducer>

As shown in FIG. 4 and FIG. 8, the second planetary gear reducer 80 includes the second sun gear 81 integrally provided on the first carrier 73 of the first planetary gear reducer 70.

The second planetary gear reducer 80 includes three (only two are shown in FIG. 8) second planetary gears 82 that are meshed with both the internal gear 61a provided in the gearbox 61 and the second sun gear 81, and roll around the second sun gear 81. The second planetary gears 82 are each rotatably supported by a second carrier 83 that forms the second planetary gear reducer 80. Specifically, the three second planetary gears 82 are arranged at equal intervals (120-degree intervals) in the circumferential direction of the second carrier 83.

One axial side of the second planetary gear 82 is rotatably abutted against the first carrier 73 via a sheet member ST; the other axial side of the second planetary gear 82 is rotatably abutted against the second carrier 83. Accordingly, the three second planetary gears 82 are smoothly rotatable and do not rattle in the axial direction of the rotating shaft 41.

On the other axial side of the second carrier 83, the output shaft 84 is integrally provided that functions as an output part of the second planetary gear reducer 80. Here, the output shaft 84 is rotatably supported by the inner ring 62b of the third ball bearing 62. The reclining mechanism or the like (not shown) is connected to the output shaft 84 in a manner allowing power transmission.

Here, a pin hole 83a is provided at an axial center of the second carrier 83. The other axial side of a support pin PN is fitted into the pin hole 83a. One axial side of the support pin PN is mounted in a hollow part 81a provided in the second sun gear 81. The support pin PN causes the axial center of the first carrier 73 (second sun gear 81) and the axial center of the second carrier 83 (output shaft 84) to coincide with each other, and supports both the first carrier 73 (second sun gear 81) and the second carrier 83 (output shaft 84) so that they are relatively rotatable to each other.

In this manner, the planetary gear reducer 60 performs two-step deceleration by the first planetary gear reducer 70 and the second planetary gear reducer 80. The rotor 40 (rotating shaft 41) which is rotated at high speed is reduced in rotation speed to a predetermined rotation speed. Rotation force obtained by reducing the speed and increasing the torque is output from the output shaft 84 to the reclining mechanism or the like (not shown).

### <Magnetic Attraction Force>

As shown in FIG. 9, in the electric motor part 20 according to the present embodiment, in the axial direction of the rotating shaft 41, a length dimension L1 of the stator core 31 is shorter than a length dimension L2 of the ring magnet 43 (L1<L2).

An axial central part of the ring magnet 43 deviates to a side opposite to an abutment direction of the abutment member 44 against the first ball bearing 23, that is, to the one axial side of the rotating shaft 41, with respect to an axial central part of the stator core 31. Specifically, in the axial direction of the rotating shaft 41, a position of a magnet center MC at the axial central part of the ring magnet 43 deviates by a deviation amount AD to one axial side (right side in the figure) with respect to a position of the core center CC at the axial central part of the stator core 31.

A length dimension L of the electric motor part 20 is about 80.0 mm, and the deviation amount AD is about 1.0 mm.

Here, to improve rotation efficiency of a rotor, in a design of a motor device, it is general to cause a core center at an axial central part of a stator core to coincide with a magnet center at an axial central part of a ring magnet in an axial direction of a rotating shaft. In contrast, in the electric motor part 20 according to the present embodiment, as shown in FIG. 9, a deviation by the deviation amount AD (about 1.0 mm) is actively provided (by design).

In the present embodiment, as shown in FIG. 9, in an assembled state of the electric motor part 20, an entire longitudinal region of the stator core 31 is arranged within a longitudinal region of the ring magnet 43. Accordingly, the rotation efficiency of the rotor 40 with respect to the stator 30 is hardly reduced.

Under the control of the in-vehicle controller CR (refer to FIG. 1), when drive current is supplied to the three-phase coils 34 to drive the electric motor part 20, between the stator core 31 (stator 30) and the ring magnet 43 (rotor 40), magnetic attraction force MF is generated that attempts to move the rotor 40 toward the other axial side. That is, the magnetic attraction force MF acts in the axial direction of the rotating shaft 41 to make the deviation amount AD "0 (zero)", that is, to cause the magnet center MC to coincide with the core center CC.

Specifically, when drive current is supplied to each of the three-phase coils 34, a magnetic flux (not shown) is formed between the stator core 31 and the ring magnet 43. At this time, to balance the magnetic flux on the left and right sides in the figure with the core center CC and the magnet center MC as the center, the magnetic attraction force MF is generated from the one axial side toward the other axial side of the rotating shaft 41.

Accordingly, the magnetic attraction force MF acts in a direction indicated by the large white arrow, pressing the rotor 40 toward the first ball bearing 23. Thus, the inner ring 23b of the first ball bearing 23 is pressed against the outer ring 23a toward the other axial side, and rattling of the first ball bearing 23, namely rattling of the inner ring 23b with respect to the outer ring 23a in the axial direction, can be eliminated.

In contrast, on one axial side of the rotor 40, the anti-rattle spring SP is arranged between the facing member 45 and the inner ring 26b of the second ball bearing 26, with the initial load applied thereto. Hence, spring force SF of the anti-rattle spring SP acts as indicated by the small white arrow, pressing the inner ring 26b of the second ball bearing 26 from the other axial side toward the one axial side of the rotating shaft 41.

Accordingly, rattling of the second ball bearing 26, namely rattling of the inner ring 26b with respect to the outer ring 26a in the axial direction, can be eliminated. It is sufficient that the spring force SF of the anti-rattle spring SP is capable of eliminating the rattling of the second ball bearing 26 during driving of the electric motor part 20, and a particularly large spring force is thus not required. Thus, a small and lightweight spring can be adopted for the anti-rattle spring SP.

As described in detail above, according to the present embodiment, as shown in FIG. 9, the axial central part (magnet center MC) of the ring magnet 43 deviates to the side (one axial side of rotating shaft 41) opposite to the abutment direction of the abutment member 44 against the first ball bearing 23, with respect to the axial central part (core center CC) of the stator core 31.

Accordingly, by supplying drive current to each of the coils 34 and driving the electric motor part 20, the magnetic attraction force MF can be generated that attempts to move (press) the rotor 40 toward the other axial side. Accordingly, due to the action of the magnetic attraction force MF, the occurrence of rattling and deviation of the axial position of the rotor 40 can be eliminated. Thus, a constant separation distance between the ring magnet 43 and the total of three Hall elements Hu, Hv, and Hw in the axial direction of the rotating shaft 41 can be maintained, and stable sensing can be performed while an increase in inertial mass is suppressed.

According to the present embodiment, the one axial side of the rotating shaft 41 is rotatably supported by the second ball bearing 26 fixed to the cover member 25. Between the second ball bearing 26 and the ring magnet 43 in the axial direction of the rotating shaft 41, the facing member 45 is provided facing the second ball bearing 26 in the axial direction of the rotating shaft 41. Between the second ball bearing 26 and the facing member 45 in the axial direction of the rotating shaft 41, the anti-rattle spring SP is arranged with a compressive load applied thereto.

Accordingly, even in the second ball bearing 26 that rotatably supports the one axial side of the rotating shaft 41, rattling in the axial direction of the rotating shaft 41 can be eliminated. Thus, it is possible to suppress the occurrence of mechanical noise during driving of the seat motor 10 and to improve quietness.

Furthermore, according to the present embodiment, the first ball bearing 23 and the second ball bearing 26 include the outer rings 23a, 26a arranged radially outside, the inner rings 23b, 26b arranged radially outside, and the steel balls 23c, 26c arranged between the outer rings 23a, 26a and the inner rings 23b, 26b. The outer rings 23a, 26a are fixed to the bearing support cylinder 22a provided in the casing 21 and the bearing support hole 25b provided in the cover member 25, respectively. The inner rings 23b, 26b are mounted on the rotating shaft 41 in a manner allowing movement in the axial direction of the rotating shaft 41.

Accordingly, by the rotor 40 and the anti-rattle spring SP arranged to stretch between the inner ring 23b of the first ball bearing 23 and the inner ring 26b of the second ball bearing 26, rattling of the first ball bearing 23 and the second ball bearing 26 in the axial direction can be eliminated.

According to the present embodiment, the total of three Hall elements Hu, Hv, Hw are provided on the cover member 25, facing the ring magnet 43 in the axial direction of the rotating shaft 41. Furthermore, the first sun gear 71 that drives the planetary gear reducer 60 is fixed to the rotating shaft 41.

Accordingly, while stable sensing by the total of three Hall elements Hu, Hv, and Hw is enabled, it is possible to optimize the meshing of the first sun gear 71 with the first planetary gear 72, and consequently to efficiently drive the planetary gear reducer 60. Thus, power consumption of the seat motor 10 can be suppressed.

Furthermore, according to the present embodiment, since power consumption of the seat motor 10 can be suppressed, particularly Goal 7 ("ensure access to affordable, reliable, sustainable and modern energy for all") and Goal 13 ("take urgent action to combat climate change and its impacts") among the Sustainable Development Goals (SDGs) defined by the United Nations can be achieved.

It goes without saying that the present disclosure is not limited to the above embodiments and can be modified in various ways without departing from the gist thereof. For example, in the above embodiment, a case is shown where the magnetic attraction force MF acts from the one axial side of the rotating shaft 41 toward the other axial side of the rotating shaft 41 (from the right side to the left side in FIG. 9). However, the present disclosure is not limited thereto. The magnetic attraction force MF is also able to act from the other axial side of the rotating shaft 41 toward the one axial side of the rotating shaft 41 (from the left side to the right side in FIG. 9).

In this case, it is sufficient if the abutment member 44 is arranged on the one axial side of the rotating shaft 41, the facing member 45 and the anti-rattle spring SP are arranged on the other axial side of the rotating shaft 41, and the axial central part of the ring magnet 43 deviates to the other axial side of the rotating shaft 41 with respect to the axial central part of the stator core 31. In this manner, if the direction in which the magnetic attraction force MF acts is reversed (made opposite), the other axial side (left side in FIG. 9) of the rotating shaft 41 serves as one axial side of rotating shaft as referred to in the present disclosure. That is, one axial side and the other axial side are reversed.

In the above embodiment, the seat motor 10 is shown as an example of a motor device. However, the present disclosure is not limited thereto. The motor device can also be applied to a drive source of any other in-vehicle device such as, for example, a power window device or a sunroof device.

The material, shape, dimension, number, installation place and the like of each component in the above embodiment are arbitrary if the present invention can be achieved, and are not limited to the above embodiment.

### [Description of Reference Numerals]

10: seat motor (motor device); 20: electric motor part; 21: casing (motor case); 21a: engagement claw; 21b: arc-shaped corner part; 22: bottom wall; 22a: bearing support cylinder (bearing fixing part); 22b: screw hole; 23: first ball bearing (bearing; rolling bearing); 23a: outer ring; 23b: inner ring; 23c: steel ball (rolling body); 24: opening part; 25: cover member (motor case); 25a: engagement recess; 25b: bearing support hole (bearing fixing part); 26: second ball bearing (another bearing; rolling bearing); 26a: outer ring; 26b: inner ring; 26c: steel ball (rolling body); 27: conductive member holding plate; 29: sensor board; 29a: through hole; 30: stator; 31: stator core; 31a: press-fit corner part; 32: teeth; 33: insulator; 34: coil; 40: rotor; 41: rotating shaft; 41a: small diameter part; 42: rotor core; 43: ring magnet (magnet); 44: abutment member; 44a: cylindrical fixing part; 44b: abutment part; 44c: annular flat plate part; 45: facing member; 45a: cylindrical fixing part; 45b: spring support; 45c: annular flat plate part; 50: deceleration mechanism; 51: reducer case; 51a: engagement claw; 52: annular bottom wall; 52a: fitting cylinder; 53: opening; 60: planetary gear reducer (driving target); 61: gearbox; 61a: internal gear; 61b: large diameter part; 61c: small diameter part; 62: third ball bearing; 62a: outer ring; 62b: inner ring; 62c: steel ball; 63: blocking member; 63a: through hole; 70: first planetary gear reducer; 71: first sun gear (drive gear); 72: first planetary gear; 73: first carrier; 80: second planetary gear reducer; 81: second sun gear; 81a: hollow part; 82: second planetary gear; 83: second carrier; 83a: pin hole; 84: output shaft; AD: deviation amount; CC: core center; CN: connector; CR: in-vehicle controller; Cu, Cv, Cw: conductive member; Hu, Hv, Hw: Hall element (magnetic sensor); MC: magnet center; MF: magnetic attraction force; PL: power line; PN: support pin; S: fixing screw; SC: screw; SF: spring force; SH: engagement shoulder; SP: anti-rattle spring (coil spring); ST: sheet member; SW: sensor line; Tu, Tv, Tw: connection terminal; WT: crossover

## Claims

1. A motor device (10), comprising a stator (30) and a rotor (40), **characterized in that**:
the stator (30) comprises:
a stator core (31), fixed radially inside a motor case (25); and
a coil (34), wound on teeth (32) provided on the stator core (31),
the rotor (40) comprises:
a rotating shaft (41), rotatably supported by a bearing (23) fixed to the motor case (25);
a magnet (43), integrally provided on the rotating shaft (41); and
an abutment member (44), fixed to the rotating shaft (41) and abutted against the bearing (23) from one axial side of the rotating shaft (41) toward an other axial side of the rotating shaft (41), wherein
an axial central part of the magnet (43) deviates to a side opposite to an abutment direction of the abutment member (44) against the bearing (23) with respect to an axial central part of the stator core (31).

2. The motor device (10) as claimed in claim 1, wherein
the one axial side of the rotating shaft (41) is rotatably supported by another bearing (26) fixed to the motor case (25);
a facing member (45) facing the another bearing (26) in the axial direction of the rotating shaft (41) is provided between the another bearing (26) and the magnet (43) in the axial direction of the rotating shaft (41); and
a coil spring (SP) with a compressive load applied thereto is arranged between the another bearing (26) and the facing member (45) in the axial direction of the rotating shaft (41).

3. The motor device (10) as claimed in claim 2, wherein
the bearing (23) and the another bearing (26) are each a rolling bearing (23, 26) comprising:
an outer ring (23a, 26a), arranged radially outside;
an inner ring (23b, 26b), arranged radially inside; and
a rolling body (23c, 26c), arranged between the outer ring (23a, 26a) and the inner ring (23b, 26b), wherein
the outer ring (23a, 26a) is fixed to a bearing fixing part (22a, 25b) provided in the motor case (25); and
the inner ring (23b, 26b) is mounted on the rotating shaft (41) in a manner allowing movement in the axial direction of the rotating shaft (41).

4. The motor device (10) as claimed in any one of claims 1 to 3, wherein
a magnetic sensor (Hu, Hv, Hw) facing the magnet (43) in the axial direction of the rotating shaft (41) is provided in the motor case (25).

5. The motor device (10) as claimed in any one of claims 1 to 3, wherein
a drive gear (71) driving a driving target (60) is fixed to the rotating shaft (41).
